# EUROPEAN PATENT SPECIFICATION

(11) **EP 2 184 107 B1**
(45) Date of publication and mention of the grant of the patent: **24.07.2013**
(21) Application number: 08828767.7
(22) Date of filing: 22.08.2008
(51) Int. Cl.: B01J 37/02, B01D 53/86, B01D 53/94, B01J 23/63, F01N 3/28

(54) **PROCESS FOR PRODUCING A CATALYST FOR EXHAUST GAS PURIFICATION AND CATALYST FOR EXHAUST GAS PURIFICATION**
VERFAHREN ZUR HERSTELLUNG EINES KATALYSATORS ZUR ABGASREINIGUNG UND KATALYSATOR ZUR ABGASREINIGUNG
PROCÉDÉ DE FABRICATION D'UN CATALYSEUR POUR LA PURIFICATION DE GAZ D'ÉCHAPPEMENT ET CATALYSEUR POUR LA PURIFICATION DE GAZ D'ÉCHAPPEMENT

(30) Priority: 27.08.2007 JP 2007219749
(43) Date of publication of application: 12.05.2010
(73) Proprietor: Tokyo Roki Co. Ltd., Tsuzuki-ku Yokohama-shi, Kanagawa 224-0041 (JP)
(72) Inventor: KUNIMITSU, Takahiro, Yokohama-shi Kanagawa 224-0041 (JP)
(74) Representative: Horner, Martin Grenville
(86) International application number: PCT/JP2008/065028
(87) International publication number: WO 2009/028422

(56) References cited:
- WO-A1-2007/026804
- JP-A- 10 219 136
- JP-A- 2005 279 436
- JP-A- 2006 096 861
- JP-A- 2006 102 703
- JP-A- 2006 175 380
- US-A- 5 182 140
- US-A- 6 149 973

## Description

### Technical Field

The present invention relates to a process for producing a catalyst for exhaust gas purification and the thus produced catalyst for exhaust gas purification.

### Background Art

To purify exhaust gas emitted from an automobile or any other similar vehicle, a catalyst for exhaust gas purification has been used in recent years. A known catalyst for exhaust gas purification of this type includes a honeycomb support on which a coating layer containing a catalyst component is formed. A catalyst for exhaust gas purification of this type is structurally **characterized in that** the exhaust gas purification efficiency can be improved by increasing the area brought into contact with exhaust gas. To increase the area brought into contact with exhaust gas, a variety of measures have been employed, for example, increasing the number of cells of the honeycomb support, reducing the thickness of the ribs of the honeycomb support, and changing the shape of the honeycomb support from a conventional rectangular-cell honeycomb support to a hexagonal-cell honeycomb support (see Japanese Patent Laid-Open NOs. 5-285397, 6-71182, 7-289918, and 2003-245547, for example).

### Disclosure of the Invention

### Problems to be Solved by the Invention

Increasing the area brought into contact with exhaust gas in prior art, however, disadvantageously reduces the strength of the catalyst for exhaust gas purification and significantly increase the manufacturing cost of the catalyst for exhaust gas purification.

The present invention has been made in view of the problems of prior art described above. An object of the present invention is to provide a process for producing a catalyst for exhaust gas purification capable of increasing the area brought into contact with exhaust gas to improve the exhaust gas purification efficiency without decrease in strength of the catalyst for exhaust gas purification and without significant increase in manufacturing cost of the catalyst for exhaust gas purification, and the thus produced catalyst for exhaust gas purification.

### Means for Solving the Problems

To solve the problems described above, the present invention provides a process for producing a catalyst for exhaust gas purification formed by forming a coating layer containing a catalyst component on a honeycomb support, **characterized in that** the method comprises immersing the honeycomb support in a thixotropic slurry containing the catalyst component or sucking the slurry into the honeycomb support, removing the honeycomb support from the slurry, spraying pulsed air onto an end surface of the removed honeycomb support in the axial direction thereof, and baking the honeycomb support to form the coating layer on the honeycomb support.

In the present invention, the slurry is **characterized in that** it contains poly-carboxylic acid or a poly-carboxylate salt.

In the present invention, the slurry is **characterized in that** it is adjusted to have a viscosity ranging from 3500 to 10000 mPa·s.

The present invention further provides a catalyst for exhaust gas purification produced by any one of the manufacturing methods described above.

The slurry of the present invention contains a catalyst component and has thixotropy. Thixotropy is a property in which the viscosity of a material decreases with time when the material is forced to flow at a constant shear velocity and the viscosity returns to the original value again when the flow is stopped and the material is kept stationary for a while. The slurry of the present invention is obtained by adding aluminum sulfate, ammonia, calcium carbonate, and other suitable substances, preferably adding poly-carboxylic acid or a poly-carboxylate salt, to enhance the thixotropy and increase the viscosity. An example of the polycarboxylate salt may be poly-carboxylic acid ammonium. It is preferred that poly-carboxylic acid or a polycarboxylate salt is added to the slurry immediately before the slurry is used and the viscosity of the slurry is adjusted as appropriate before the slurry is used.

The honeycomb support is then immersed in the slurry of the present invention or the slurry of the present invention is sucked into the honeycomb support. Thereafter, the honeycomb support is removed from the slurry, and pulsed air is sprayed onto an end surface of the removed honeycomb support. In this process, a turbulent flow is produced in the honeycomb support. The flow rate of the air preferably ranges from 10 to 150 m/s. The turbulent flow stretches the perimeter of the coating layer, and hence the surface area thereof increases. In a catalyst for exhaust gas purification formed by forming a coating layer containing a catalyst component on a honeycomb support, in general, increase in the surface area of the coating layer increases the area brought into contact with exhaust gas and hence improves the exhaust gas purification efficiency. Therefore, according to the present invention, the surface area of the coating layer increases, whereby the area brought into contact with exhaust gas increases and hence the exhaust gas purification efficiency is improved. Further, in the present invention, a conventional honeycomb support can be used as it is, and it is not necessary to increase the number of cells of the honeycomb support or reduce the thickness of the ribs of the honeycomb support. Additionally, in the present invention, it is not necessary to change the shape of the honeycomb support from a conventional rectangular-cell honeycomb support to a hexagonal-cell honeycomb support. Therefore, according to the present invention, the strength of the catalyst for exhaust gas purification will not decrease and the manufacturing cost of the catalyst for exhaust gas purification will not significantly increase. The present invention can therefore increase the area brought into contact with exhaust gas to improve the exhaust gas purification efficiency without decrease in strength of the catalyst for exhaust gas purification and without significant increase in manufacturing cost of the catalyst for exhaust gas purification.

### <Cross-reference to related documents>

The present application claims priority based on Japanese Patent Application No. 2007-219749 filed on August 27, 2007, the contents of which is incorporated herein.

### Brief Description of the Drawings

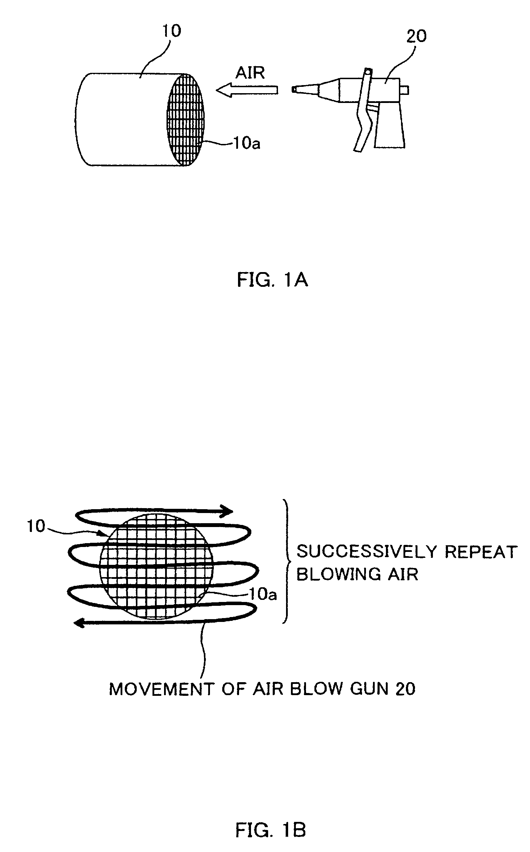

Figure 1A shows how pulsed air is successively sprayed onto an end surface of a honeycomb support in the axial direction thereof in an embodiment;
Figure 1B shows the end surface of the honeycomb support shown in Figure 1A;
Figure 2A shows an enlarged photograph of a catalyst for exhaust gas purification provided in an inventive method;
Figure 2B shows an enlarged photograph of a catalyst for exhaust gas purification provided in a conventional method;
Figure 3A shows the perimeter of a coating layer expressed by a dotted line added to the photograph shown in Figure 2A;
Figure 3B shows the perimeter of a coating layer expressed by a dotted line added to the photograph shown in Figure 2B;
Figure 4 is a bar chart for comparing the perimeters of the coating layers of the catalysts for exhaust gas purification provided in the inventive and conventional methods; and
Figure 5 shows a bar chart for comparing measured NOx purification rates of the catalysts for exhaust gas purification provided in the inventive and conventional methods.

### Description of Symbols

10 honeycomb support (having been immersed in a slurry) 20 air blow gun

### Best Mode for Carrying Out the Invention

The present invention will be described below in detail with reference to an embodiment.

In the present embodiment, a catalyst for exhaust gas purification was produced as follows: That is, in the present embodiment, a palladium nitrate solution was first dripped onto highly heat-resistant γ-alumina powder. The mixture was then dried and baked at 500°C. Alumina palladium powder was thus obtained.

The alumina palladium powder (45 g/l, the amount of Pd on the carrier was 0.8 g/l) was mixed with CeZrNd complex oxide (5.7 g/l), cerium oxide (11.4 g/l), and a zirconia binder (7.8 g/l). Distilled water (ranging from 265 to 310 g) was added to the mixture. The resultant product was agitated and mixed in a disperser into a slurry. The slurry was then crashed in a wet crusher so that the median diameter of the slurry was 5 µm or smaller. Thereafter, the slurry was mixed with a polycarboxylate salt (2.7 g, corresponding to 6.75 g of Product Name "Alpha-resin SA-300" (made by ALFA KAKEN CORPORATION). The mixture was agitated and mixed in the disperser into a slurry having enhanced thixotropy and increased viscosity. The viscosity of the slurry was measured several times to find out that the viscosity ranged from 3500 to 10000 mPa·s. A honeycomb support made of cordierite was immersed in the slurry, and the honeycomb support was removed out of the slurry. While the honeycomb support made of cordierite is immersed in the slurry and then the honeycomb support is removed out of the slurry in the present embodiment, the present invention is not limited to the method described in the present embodiment. For example, the slurry may be sucked into the honeycomb support made of cordierite and then the honeycomb support may be removed.

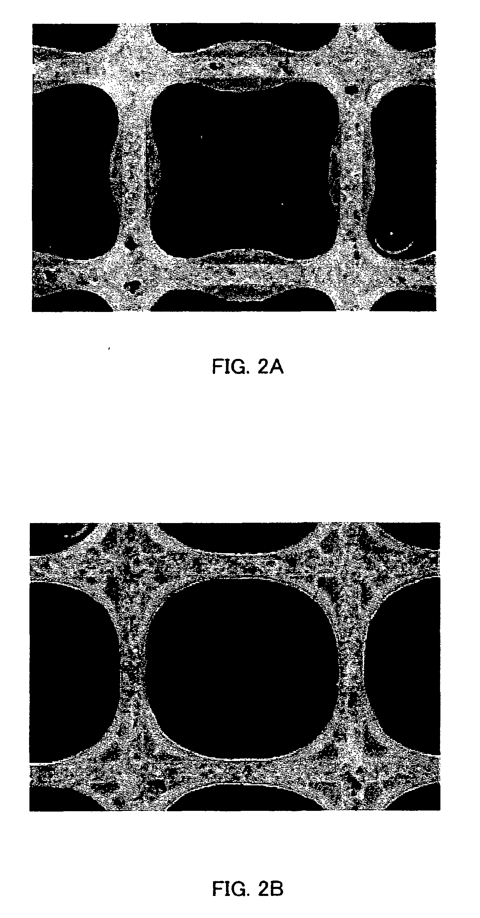

Thereafter, a predetermined air blow gun 20 was used to spray pulsed air successively in the axial direction of the gun onto an end surface 10a of the removed honeycomb support 10 (that is, pulsed air was blown at a high flow rate). In the resultant complex air flow, or with the grid of the honeycomb support 10 being resistance to the air, a turbulent flow was produced in the honeycomb support 10. The turbulent flow removed extra slurry from the honeycomb support, and the surface of the honeycomb support was coated with a predetermined amount of slurry. Thereafter, the honeycomb support was baked in a baking furnace at 500°C so that a coating layer was formed on the honeycomb support. A catalyst for exhaust gas purification was thus obtained. Figure 2A shows an enlarged photograph of the resultant catalyst for exhaust gas purification. Further, along with the present embodiment, another catalyst for exhaust gas purification was produced by using a conventional method, a process used in a comparison example. In the comparison example, the catalyst for exhaust gas purification was obtained without using the polycarboxylate salt described above but with the other conditions being the same as those in the present embodiment. Figure 2B shows an enlarged photograph of the resultant catalyst for exhaust gas purification.

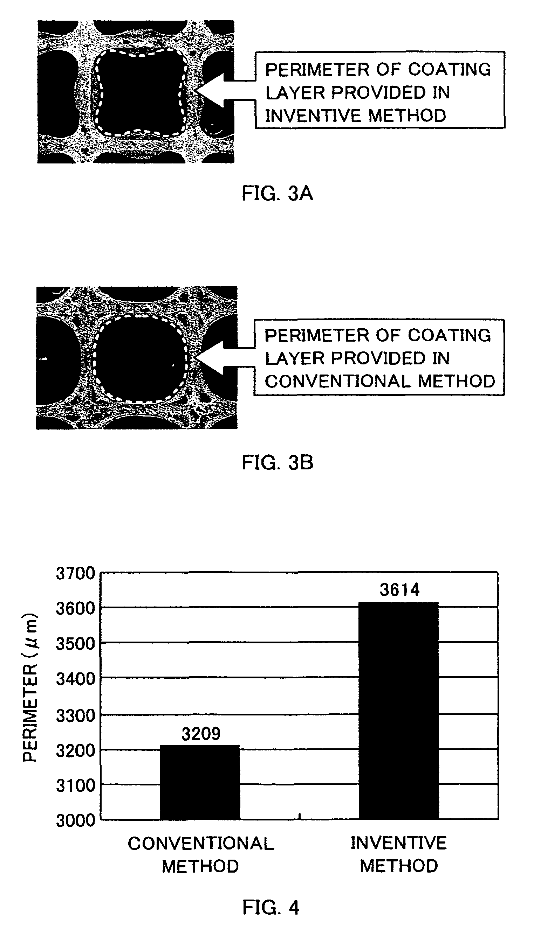

According to the process for producing a catalyst for exhaust gas purification of the present embodiment (hereinafter referred to as an "inventive method"), a coating layer is formed on each cell of the rectangular-cell honeycomb support, as shown in Figure 2A. The coating layer is shaped in such a way that a central area of each side of the cell is convex toward the center of the cell, and hence the central portion of each side of the cell is thicker than the other areas. On the other hand, according to the process for producing a catalyst for exhaust gas purification of the comparison example (hereinafter referred to as a "conventional method"), a coating layer having a substantially circular cross-sectional shape is formed in each cell of the honeycomb support, and each corner of the cell is thick, as shown in Figure 2B. Figures 3A and 3B show the perimeters of the coating layers expressed by dotted lines added to the photographs shown in Figures 2A and 2B. Figure 4 is a bar chart for comparing the perimeters of the coating layers.

As shown in Figure 4, the perimeter of the coating layer was only 3209 µm when the conventional method was used, whereas the perimeter of the coating layer was increased to 3614 µm when the inventive method was used. That is, in the inventive method, the perimeter of the coating layer was increased by a factor of 1.2620 ≈ 3614 µm / 3209 µm, as compared with the conventional method. The catalyst for exhaust gas purification provided in the inventive method is therefore superior to the catalyst for exhaust gas purification provided in the conventional method in that the area brought into contact with exhaust gas is increased by a factor of approximately 1.2620. As a result, the exhaust gas purification efficiency is, of course, improved.

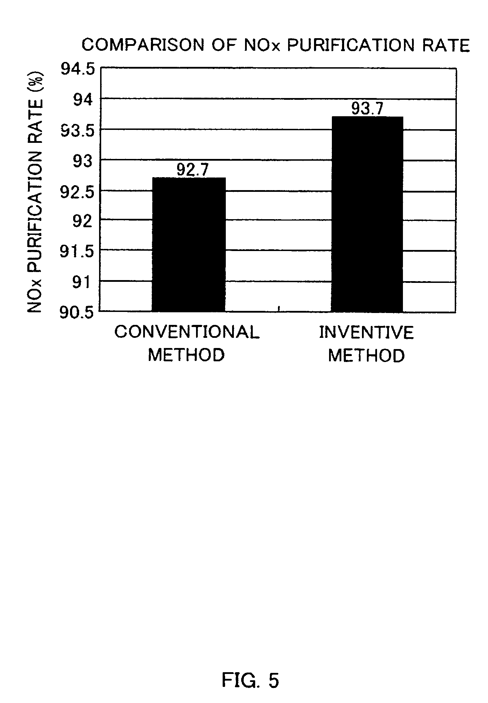

Next, to confirm the result described above and how much the exhaust gas purification efficiency will be improved, the NOx purification rate of the catalysts for exhaust gas purification provided in the present embodiment and the comparison example was examined. The NOx purification rate was measured based on an EM purification performance test (engine bench aging 60h). The EM purification performance test (engine bench aging 60h) is an engine durability test (test duration 60h) using a predetermined bench engine (an in-line four-cylinder, 2.0-litter engine). Specifically, the NOx purification rate was measured by switching the driving mode between idling and 4000-rpm driving every one minute, placing the catalysts for exhaust gas purification one at a time at the outlet of an EX manifold, and setting the temperature at the inlet of the EX manifold at 850°C at the maximum. Figure 5 shows the measurement results.

As shown in Figure 5, the NOx purification rate was approximately only 92.7% when the conventional method was employed, whereas the NOx purification rate was increased to approximately 93.7% when the inventive method was employed. That is, the inventive method is superior to the conventional method in terms of NOx purification rate by as much as approximately 1% (≈ 93.7% - approximately 92.7%).

In addition to the present embodiment and the comparison example, tests similar to those described above were carried out by using a different formulation of the slurry. The results were the same as those for the present embodiment and the comparison example. Specifically, a catalyst for exhaust gas purification was produced by using alumina palladium powder (45 g/l, the amount of Pd on the carrier of 26 g/l) and changing the amounts of the added distilled water and poly-carboxylate salt to a value ranging from 185 to 230 g and 1.4 g, (using 3.50 g of Product Name "Alpha-resin SA-300" (made by ALFA KAKEN CORPORATION)) respectively. Coating layers similar to those shown in Figures 2A and 2B were formed on the honeycomb support. In the inventive method, the perimeter of the coating layer was increased as in Figure 4, and the NOx purification rate was improved as in Figure 5.

The inventive method can not only increase the area brought into contact with exhaust gas to improve the NOx purification rate as described above, but also improve the exhaust gas purification efficiency for hydrocarbon (HC), carbon monoxide (CO), and other exhaust gas as well as NOx. Further, in the inventive method, a conventional honeycomb support can be used as it is, and it is not necessary to increase the number of cells of the honeycomb support or reduce the thickness of the ribs of the honeycomb support. Additionally, in the inventive method, it is not necessary to change the shape of the honeycomb support from a conventional rectangular-cell honeycomb support to a hexagonal-cell honeycomb support. The inventive method can therefore increase the area brought into contact with exhaust gas to improve the exhaust gas purification efficiency without decrease in strength of the catalyst for exhaust gas purification and without significant increase in manufacturing cost of the catalyst for exhaust gas purification.

While in the inventive method described above, a poly-carboxylate salt is added to the slurry to enhance the thixotropy and increase the viscosity of the slurry, poly-carboxylic acid, aluminum sulfate, ammonia, calcium carbonate, and other suitable substances may be added to the slurry to enhance the thixotropy and increase the viscosity thereof. For example, when aluminum sulfate, ammonia, and calcium carbonate are added to the slurry, aluminum sulfate (2.3 g/l), ammonia (2.2 g/l), and calcium carbonate (3.4 g/l) can be added to the alumina palladium powder (45 g/l, the amount of Pd on the carrier is 0.8 g/l), CeZrNd complex oxide (5.7 g/l), cerium oxide (11.4 g/l), a zirconia binder (7.8 g/l), and distilled water (80 to 120 g) to provide a slurry having thixotropy.

### Industrial Applicability

The present invention can provide a process for producing a catalyst for exhaust gas purification capable of increasing the area brought into contact with exhaust gas to improve the exhaust gas purification efficiency without decrease in strength of the catalyst for exhaust gas purification and without significant increase in manufacturing cost of the catalyst for exhaust gas purification, and the thus produced catalyst for exhaust gas purification.

## Claims

1. A process for producing a catalyst for exhaust gas purification formed by forming a coating layer containing a catalyst component on a honeycomb support, **characterized in that** the method comprises:
immersing the honeycomb support in a thixotropic slurry containing the catalyst component or sucking the slurry into the honeycomb support;
removing the honeycomb support from the slurry;
spraying pulsed air onto an end surface of the removed honeycomb support in the axial direction thereof; and
baking the honeycomb support to form the coating layer on the honeycomb support.

2. The process for producing a catalyst for exhaust gas purification according to claim 1, **characterized in that** the slurry contains poly-carboxylic acid or a polycarboxylate salt.

3. The process for producing a catalyst for exhaust gas purification according to claim 1 or 2, **characterized in that** the slurry is adjusted to have a viscosity ranging from 3500 to 10000 mPa·s.

4. A catalyst for exhaust gas purification produced by the manufacturing method according to any one of claims 1 to 3.

## Patentansprüche

1. Verfahren zur Herstellung eines Katalysators für die Abgasreinigung, der durch Bilden einer Beschichtungsschicht, die eine Katalysatorkomponente enthält, auf einem Wabenträger gebildet wird, **dadurch gekennzeichnet, dass** die Methode Folgendes umfasst:
das Eintauchen des Wabenträgers in eine thixotropen Aufschlämmung, die die Katalysatorkomponente enthält, oder das Saugen der Aufschlämmung in den Wabenträger;
das Entfernen des Wabenträgers aus der Aufschlämmung;
das Sprühen von pulsierter Luft auf eine Endfläche des entfernten Wabenträgers in axialer Richtung davon; und
das Brennen des Wabenträgers unter Bildung der Beschichtungsschicht auf dem Wabenträger.

2. Verfahren zur Herstellung eines Katalysators für die Abgasreinigung, nach Anspruch 1, **dadurch gekennzeichnet, dass** die Aufschlämmung Polycarbonsäure oder ein Polycarboxylatsalz enthält.

3. Verfahren zur Herstellung eines Katalysators für die Abgasreinigung nach Anspruch 1 oder 2, **dadurch gekennzeichnet, dass** die Aufschlämmung eingestellt wird, so dass sie eine Viskosität im Bereich von 3500 bis 10000 mPa·s aufweist.

4. Katalysator zur Abgasreinigung, der durch die Herstellungsmethode nach einem der Ansprüche 1 bis 3 hergestellt wird.

## Revendications

1. Procédé de production d'un catalyseur destiné à la purification de gaz d'échappement formé par la formation d'une couche de revêtement contenant un composant catalyseur sur un support en nid-d'abeille, **caractérisé en ce que** le procédé comprend :
l'immersion du support en nid-d'abeille dans une suspension thixotrope contenant le composant catalyseur ou la succion de la suspension dans le support en nid-d'abeilles ;
le retrait du support en nid-d'abeille de la suspension ;
la pulvérisation d'air pulsé sur une surface finale du support en nid-d'abeille retiré dans son sens axial ; et
la cuisson du support en nid-d'abeille pour former la couche de revêtement sur le support en nid-d'abeille.

2. Procédé de production d'un catalyseur destiné à la purification de gaz d'échappement selon la revendication 1, **caractérisé en ce que** la suspension contient du poly-acide carboxylique ou un sel polycarboxylate.

3. Procédé de production d'un catalyseur destiné à la purification de gaz d'échappement selon la revendication 1 ou 2, **caractérisé en ce que** la suspension est ajustée pour avoir une viscosité s'étendant de 3500 à 10000 mPa·s.

4. Catalyseur pour la purification de gaz d'échappement produit selon le procédé de fabrication selon l'une quelconque des revendications 1 à 3.
